**Europäisches Patentamt**

**European Patent Office**

**Office européen des brevets**

(19)

(11) Veröffentlichungsnummer: **0 032 710**
**B1**

(12)

# EUROPÄISCHE PATENTSCHRIFT

(45) Veröffentlichungstag der Patentschrift:
20.06.84

(21) Anmeldenummer: 81100189.0

(22) Anmeldetag: 13.01.81

(51) Int. Cl.³: **G 01 B 11/30, G 01 N 21/88**

(54) **Verfahren und Vorrichtung zur Oberflächenanalyse von flexiblen Materialien.**

(30) Priorität: **19.01.80 DE 3001881**

(43) Veröffentlichungstag der Anmeldung:
**29.07.81 Patentblatt 81/30**

(45) Bekanntmachung des Hinweises auf die Patenterteilung:
**20.06.84 Patentblatt 84/25**

(84) Benannte Vertragsstaaten:
**BE CH DE FR GB IT LI NL**

(56) Entgegenhaltungen:
**DE - A - 1 920 928**
**DE - A - 2 441 822**
**DE - A - 2 658 399**
**US - A - 3 843 261**

(73) Patentinhaber: **BASF Aktiengesellschaft,**
**Carl-Bosch-Strasse 38, D-6700 Ludwigshafen (DE)**

(72) Erfinder: **Hammon, Fritz, Ludwigshafener Strasse 6D,**
**D-6710 Frankenthal (DE)**

**Beschreibung**

Die Erfindung betrifft ein Verfahren zur Analyse der Oberflächenbeschaffenheit von flexiblen Materialien, insbesondere von Folienbahnen durch Erzeugung von Interferenzstreifen mittels eines schräg auf die zu untersuchende Oberfläche eines Messobjekts gerichteten Lichtstrahls, wobei der Lichtstrahl zu einem Teil an der Oberfläche und zu einem anderen Teil an einer Referenzfläche reflektiert wird und durch Übertragung der beiden Teilstrahlen ein dem von der Referenzfläche sich abhebenden Oberflächenprofil des Messobjekts äquivalentes Interferenzfeld entsteht, das zur Bestimmung der Ausdehnung des Oberflächenprofils in seiner Länge und Höhe mit Hilfe der Inteferenzlinienabstände und der Wellenlänge des eingestrahlten Lichts ausgewertet wird. Ferner betrifft die Erfindung eine Vorrichtung zur Durchführung des Verfahrens.

Flexible Materialien werden für eine Reihe von technischen Anwendungen laufend auf ihre Oberflächengüte geprüft. Insbesondere bei der Herstellung von Magnetbändern ist es erforderlich, die Folienbahnen sowohl vor als auch nach der Beschichtung mit dem magnetisierbaren Pigment auf die Ebenheit und die Beschaffenheit ihrer Oberfläche zu überprüfen, da Abstandsschwankungen zwischen Magnetkopf und Oberfläche des Magnetbandes bekannterweise sowohl die Aufzeichnung als auch den Lesespannungspegel erheblich beeinflussen. Derartige Überprüfungen werden gewöhnlich stichprobenweise für eine statistische Kontrolle durchgeführt.

Eine bisher übliche und empfindliche Methode ist die Untersuchung und Messung mit Hilfe eines Interferenzmikroskops, dessen vergrössertes Bild der zu untersuchenden Oberfläche von Interferenzerscheinungen überlagert ist. Diese entstehen durch Aufspalten der Lichtstrahlen einer monochromatischen Lichtquelle durch Reflexion an der Oberfläche und Brechung bzw. Reflexion an einem Spiegel in zwei Teilstrahlenbündel, die wieder überlagert werden. Dadurch erscheinen im Mikroskop parallele Interferenzlinien im Abstand einer halben Wellenlänge. Bei Natriumlicht beträgt der Abstand 0,29 $\mu$m. Bei Unebenheiten der zu untersuchenden Oberfläche werden die Interferenzlinien ausgelenkt, so dass sich dem Oberflächenprofil entsprechende Interferenz-Linienzüge ergeben. Die Höhe der Unebenheiten lässt sich aus den in Linienabständen gemessenen Auslenkungen bzw. aus der Zahl der die Unebenheiten umgebenden Interferenzringe bestimmen.

Erhöhungen bzw. Vertiefungen in oder auf der magnetisierbaren Schicht von Folienbahnen oder -bändern weisen in den meisten Fällen einen Durchmesser auf, der kaum grösser als 25 $\mu$m ist; oft liegt er sogar unter 2$\mu$m. Derartige Fehler treten meistens in Form von Warzen, Kuppen oder Kegeln, seltener in Form von Mulden oder sonstiger Vertiefungen auf, und werden durch Störungen in der magnetischen Dispersion verursacht. Um die Unebenheiten zu finden und die sie umgebenden Ringe auszählen zu können, muss daher eine hohe Vergrösserung des Mikroskops gewählt werden. Gewöhnlich liegt sie bei 250- bis 500fach, so dass das Beobachtungsfeld nur mehr eine Fläche von 0,01 mm² bis 0,05 mm² umfasst. Für eine statistisch ausreichend gesicherte Prüfung von Folienbahn- oder Bandoberflächen auf vereinzelt auftretende Unebenheiten oben geschilderter Art sind jedoch Beobachtungsfelder dieser Grösse völlig unzureichend.

Es stellt sich daher die Aufgabe, ein Verfahren und eine Vorrichtung zur Analyse der Oberflächenbeschaffenheit von flexiblen Materialien, insbesondere von Folienbahnen, zu entwickeln, bei denen ein für die Suche nach vereinzelt auf der zu untersuchenden Oberfläche auftretenden Unebenheiten genügend grosses Beobachtungsfeld zur Verfügung steht und gleichzeitig praxisgerecht das Ausmass und die Art der gefundenen Unebenheiten bestimmt werden kann.

Die Aufgabe wurde durch ein Verfahrenn der eingangs beschriebenen Art gelöst, bei dem erfindungsgemäss das zu untersuchende Messobjekt an die Referenzfläche unter vorbestimmter Zugspannung angelegt wird.

Eine bevorzugte Ausführungsform des Verfahrens sieht vor, dass zur Untersuchung auf das Vorliegen einer Erhöhung oder einer Vertiefung der Oberfläche das interferometrisch untersuchte Oberflächenfeld in Form eines Materialbahnvorschubs des Messobjekts ausserhalb der Referenzfläche gebracht und dort unter einer Neigung zur optischen Achse zwischen 80 und 45 Winkelgraden betrachtet wird und die Einfallsrichtung des Lichtstrahlenbündels dabei so gewählt wird, dass an einer beliebig gewählten, zur ebenen Oberfläche des Messobjekts antiparallelen Fläche der einfallende Lichtstrahl in Richtung der optischen Achse reflektiert wird, und dass aus der Helligkeitsverteilung des betrachteten Oberflächenfeldes auf den Verlauf dieser Flanken und damit auf den Verlauf des Oberflächenprofils geschlossen wird.

Die Vorrichtung zur Durchführung des Verfahrens weist eine Lichtquelle und eine optische Einrichtung zur Sichtbarmachung des durch die zu untersuchende Oberfläche des Messobjekts und einer Referenzfläche erzeugten Interferenzfeldes auf und ist dadurch gekennzeichnet, dass eine Einrichtung zum Anlegen des Messobjekts unter vorbestimmter Zugspannung an die Referenzfläche vorgesehen ist.

Eine vorteilhafte Ausführungsform der Vorrichtung sieht vor, dass ein gebogenes Glassegment vorgesehen ist, an dessen konvexer Referenzfläche das Messobjekt mit der zu untersuchenden Oberfläche mit Hilfe der Spanneinrichtung zumindest teilweise anliegt.

Dabei ist es günstig, wenn die konvexe Krümmung des Glassegments gleich der Krümmung eines gebräuchlichen Magnetkopfes im Bereich dessen Luftspaltes ist.

Ferner kann die Referenzfläche auch durch ein zweites, flexibles Messobjekt gebildet sein.

In Weiterbildung der erfindungsgemässen Vorrichtung ist zur Beobachtung mittels eines Fernsehmonitors und/oder zur Speicherung der sichtbar gemachten Oberflächenbeschaffenheit des Messobjekts eine Laufbildkamera auf die optische Beobachtungseinrichtung, vorzugsweise auf das Okular eines Mikroskops, ausgerichtet.

Für die Suche nach Unebenheiten wird eine Vergröberung in der Weise erzeugt, dass durch das Anlegen der zu untersuchenden Oberfläche des Messobjekts an eine sehr glatte Fläche der Wirkungsbereich der Unebenheiten erheblich vergrössert wird. In einem veranschaulichenden Vergleich dargestellt bedeutet dies, dass ähnlich der Zeltstange eines Rundzeltes eine Erhöhung auf der Oberfläche, beispielsweise ein festsitzender Fremdkörper, das Messobjekt, z.B. ein Folienstück von der glatten, als Referenzfläche anzusehenden Auflagefläche in einem weiten Umkreis abhebt, so wie dies durch eine Unebenheit auf einem Magnetband am Magnetkopf geschieht. Der Basisdurchmesser dieses Zeltes ist ein Vielfaches des Durchmessers des Fremdkörpers. Wird die Anlagefläche transparent ausgeführt und das Messobjekt durch die Fläche mit monochromatischem Licht beleuchtet, so wird die Zeltbasis durch Interferenz der vom Messobjekt und der von der Anlagefläche reflektierten Lichtstrahlen sichtbar. Damit ist auf einfache Weise erreicht, dass Unebenheiten obengenannter Grössenordnung bei kleiner Vergrösserung des Mikroskops bei einem grossen Beobachtungsfeld also, durch die Interferenzringe, die an den das Zelt bildenden Grenzflächen entstehen, leicht erkannt werden können. Die Höhe der Unebenheiten, d.h. in unserem obigen Beispiel die Höhe des Fremdkörpers, kann durch Auszählen der Ringzahl bestimmt werden.

Weitere Einzelheiten und Vorteile des erfindungsgemässen Verfahrens und der Vorrichtung ergeben sich aus der nachfolgenden Beschreibung eines in der Zeichnung dargestellten Ausführungsbeispiels.

Es zeigt:

Fig. 1 eine schematische Darstellung der Vorrichtung für die Oberflächenanalyse;

Fig. 2 einen schematisch dargestellten Ausschnitt des Beobachtungsfeldes mit einer Unebenheit;

Fig. 3 ein vergrössertes Oberflächenprofil des Messobjekts mit dem Lichtstrahlenschema zur Bestimmung der Art der Unebenheiten;

Fig. 4 eine Detailansicht der Vorrichtung nach Fig. 1, darstellend die Messanordnung an einem gewölbten Glassegment.

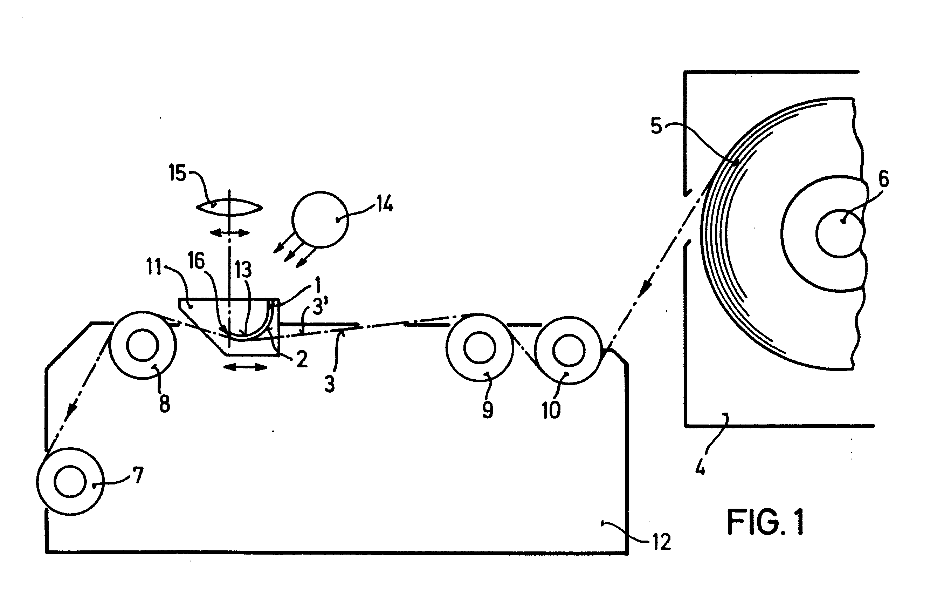

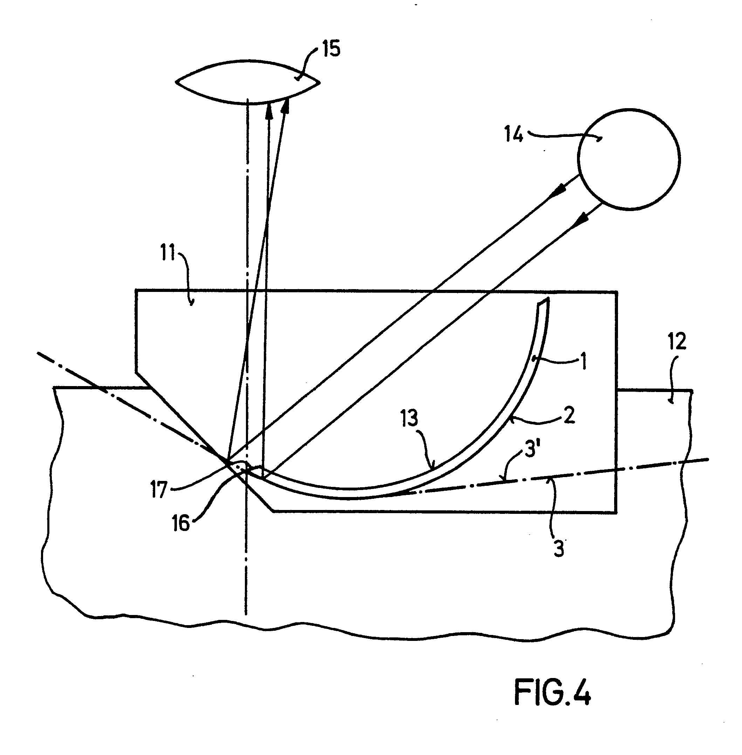

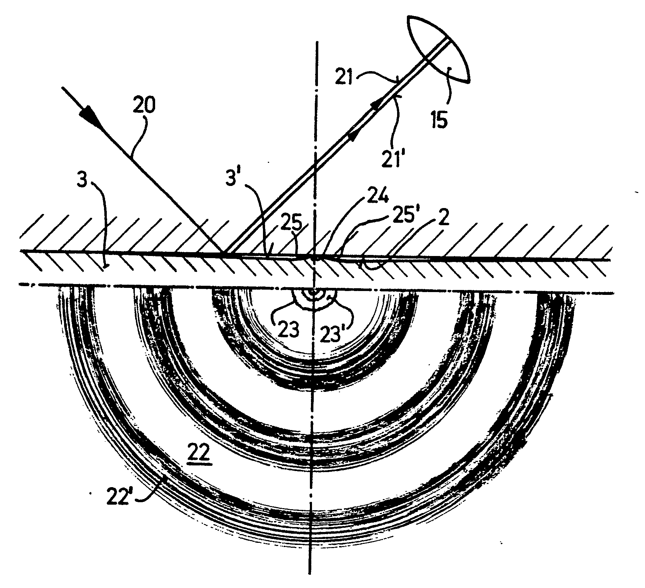

Zentrales Teil der Vorrichtung ist eine transparente Unterlage 1 (Fig. 1 und 4), bestehend aus einem etwa kreisförmig gewölbten Glassegment, über dessen konvexe, äusserst glatte Fläche 2, die als Referenzfläche dient, das zu untersuchende, flexible Material 3, beispielsweise eine Folienbahn oder ein Magnetband, geführt ist und mit der zu prüfenden Oberfläche daran anliegt. Um ähnliche oder gleiche Zugspannungen wie in der praktischen Anwendung zu gewährleisten, ist eine Spanneinrichtung für das zu untersuchende Material — in der weiteren Beschreibung Messobjekt genannt — vorgesehen. Bei bahn- bzw. bandförmigen Materialien des Messobjekts besteht sie aus einer in einem zum Glassegment 1 hin offenen, vor Staub schützenden Gehäuse 4 drehbaren Abwickelrolle 5, deren Welle 6 ständig gebremst ist, und aus einer Aufwickelrolle 7 für das Messobjekt 3. Die Aufwickelrolle ist zum Vorschub des Messobjekts mittels eines auf deren Welle befestigten Rades von Hand oder durch einen sehr langsam umlaufenden elektromotorischen Antrieb drehbar. Zwischen den beiden Rollen 5 und 7 läuft das Messobjekt über Führungsrollen 8 und 9, um den Kontakt mit der konvexen Fläche 2 des Glassegments 1 herzustellen. Ferner ist eine der Abwickelrolle 5 unmittelbar nachgeordnete Vliesstoffrolle 10 vorgesehen, durch die die zu untersuchende Oberfläche 3' des Messobjekts von losem Staub gereinigt wird.

Es hat sich als vorteilhaft erwiesen, dem Gehäuse gefilterte Luft durch einen Ventilator zuzuführen, damit Staubpartikel vom Messobjekt und der Abwickelrolle ferngehalten werden.

Das Glassegment 1 besteht aus transparentem Material, vorzugsweise aus Glas mit einer Stärke von 0,3 bis 2 mm. Je geringer die Wandstärke, um so geringer sind die vom Glas hervorgerufenen optischen Verzerrungen. Für die Untersuchung von Magnetbändern hat sich für die Wölbung ein Radius von etwa 15 mm als vorteilhaft erwiesen, da diese dem Radius der meisten Magnetkopfspiegel entspricht, so dass sich praxisgerechte Kopfkontakt-Verhältnisse ergeben.

Die Stirnfläche 17 des Glassegments 1 (Fig. 4) ist so geschliffen, dass sie zur Fläche des Messobjekts 3 unter einem Winkel von 60° geneigt ist. Dieser Schliff vermeidet Schattenbildung an der unteren Kante 16 der Stirnfläche 17 und erlaubt auch noch die Beobachtung des Messobjekts 3 durch die schmale Seite.

Das Glassegment 1 ist in Führungsschlitzen des Segmentträgers 11 so befestigt, dass die Tangente an die Kante 16 in einem Winkel von ca. 60° zur Beobachtungsachse geneigt ist.

Der Glassegmentträger 11 kann, durch Nuten geführt, auf den beiden Stirnplatten 12, in denen auch die Rollen 7 bis 10 gelagert sind, in Vorschubrichtung des Messobjekts 3 parallel verschoben werden und durch 2 Klemmschrauben an beiden Seiten des Segmentträgers 11 auf diesen arretiert werden.

Über dem Glassegment 1, d.h. über dessen konkaver Fläche 13 ist als Lichtquelle eine Natrium-Dampflampe 14 so angeordnet, dass deren Lichtstrahlen in einem Winkel von etwa 45° zur Horizontalen, d.h. in einem Winkel von ca. 105° auf die Referenzfläche 2 an der Kante 16 und auf das tangential vom Glassegment abgezogene Messobjekt 3 treffen.

Eine ebenfalls über der Fläche 13 befindliche optische Einrichtung 15 zur Sichtbarmachung des von den sich berührenden Flächen 2 und 3' erzeugten Inteferenzfeldes, vorzugsweise ein Mikroskop, ist so ausgerichtet, dass deren optische Achse etwa auf die Kante 16 fällt. Das Beobachtungsfeld wird durch die Kante 16 also halbiert in eine Bildhälfte mit dem Messobjekt 3 unter dem Glas und in eine Bildhälfte mit dem freien unter einem Winkel von ca. 60° zur optischen Achse geneigten Messobjekt 3. Die erste Bildhälfte dient der bereits oben zusammenfassend geschilderten Auffindung und Höhenmessung der Unebenheiten.

Die zweite Bildhälfte dient, wie später erläutert, der Bestimmung der Art der Unebenheiten, sowie der visuellen Beurteilung der Gesamt-Struktur der Oberfläche.

Die Vorrichtung kann noch durch einen Längenzähler zur Bestimmung der untersuchten Bahn- bzw. Bandlänge ergänzt werden. Dieser steht dann mit der Welle der Aufwickelrolle 7 in Verbindung.

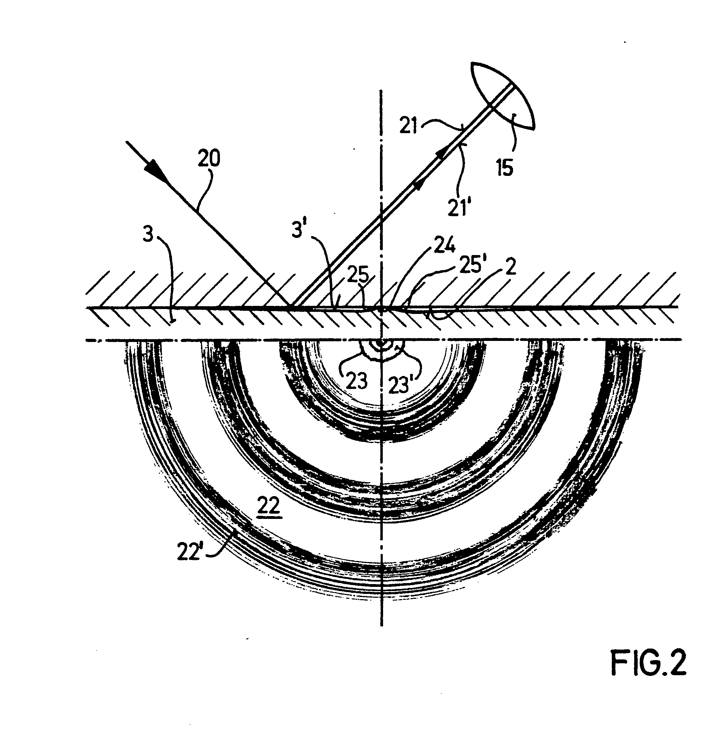

Zur Durchführung des Verfahrens wird nach Entfernen des Trägers 11 zunächst das Messobjekt 3 in die Bandführung eingelegt. Der danach wieder eingesetzte Träger 11 mit dem Glassegment 1 wird so eingestellt, dass das Messobjekt an der Kante 16 tangential ausläuft. Wie bereits erläutert, wird das Messobjekt 3 durch eine aus dessen Oberfläche 3' hervorstehende Unebenheit von der konvexen Fläche 2 des Glassegments 1 zeltförmig abgehoben, so dass — wie Fig. 2 zeigt — das einfallende monochromatische Licht 20 zum Teil an der Fläche 2 und zum Teil an der zu untersuchenden Oberfläche 3' reflektiert wird. Durch die Laufzeitunterschiede zwischen den so entstehenden Teilstrahlen 21, 21' und durch eine Phasendrehung bei der Reflexion am dichteren Medium um 180° entstehen bei Überlagerung der Teilstrahlenbündel je nach Gangunterschied der Strahlen Auslöschungen und Verstärkungen. Diese Überlagerungserscheinungen bezeichnet man bekanntlich als Interferenz und werden auf einem Schirm bzw. im Mikroskop 15 in der ersten Bildhälfte als helle und dunkle Streifen 22, 22' sichtbar, die bei Abheben der Oberfläche 3' durch punktförmige Unebenheiten ringförmig verlaufen. Der Abstand zwischen zwei benachbarten Interferenzringen 22' entspricht einer Abstandsänderung zwischen den Flächen 2 und 3' von einer halben Wellenlänge des eingestrahlten Lichtes, bei Natriumdampflicht 0,29 μm also. Multipliziert man diese Abstandsänderung mit der Anzahl der Interferenzringe 22' des gesamten, durch die Unebenheiten verursachten Gebildes, so ergibt sich die Höhe der eigentlichen Unebenheit z.B. eines aus der Oberfläche 3' tragenden Kegels oder einer Kuppe. Mit Hilfe eines Massstabrasters des Mikroskops kann gleichzeitig der Durchmesser der gesamten vom Kegel oder von der Kuppe hervorgerufenen Oberflächenstörung bestimmt werden.

Zu beachten ist dabei, dass die sehr feinen und eng beieinanderliegenden Interferenzringe 23, 23' im Zentrum der Oberflächenstörung, d.h. unmittelbar um die Erhöhung 24, die sich von den Interferenzringen 22, 22' deutlich unterscheiden, unberücksichtigt bleiben. Sie entstehen an der steilen Flanke 25, 25' der Erhöhung selbst. Natürlich kann bei genügender Vergrösserung die Höhenmessung auch mittels dieser Interferenzringe durchgeführt werden.

Wie zu erkennen ist, lässt sich die Oberfläche des Messobjekts durch die ausgedehnten Interferenzerscheinungen schnell und gründlich nach störenden Unebenheiten der eingangs aufgezählten Art, deren Grösse im μm-Bereich liegen, absuchen. Es hat sich dabei gezeigt, dass zur Zählung der Interferenzringe eine 10- bis 20fache Vergrösserung des Mikroskops ausreicht. Dies entspricht einem Beobachtungsfeld zwischen 330 und 50 mm², dem 1000- bis 10 000-fachen gegenüber Untersuchungsmethoden mit einem Inteferenzmikroskop.

Wie aber können Erhöhungen und Vertiefungen in der zu untersuchenden Oberfläche 3' des Messobjekts 3 unterschieden werden? Ein Merkmal der Erhöhungen ist z.B. das oben erwähnte zweite Interferenzringsystem im Zentrum der Oberflächenstörung. Vertiefungen besitzen nur ein zentrales Interferenzringsystem mit geringem Durchmesser, da das Abheben von der Referenzfläche 2 fehlt. Ein weiteres Merkmal besteht darin, dass bei Änderung der Spannung des Messobjekts bei einer Vertiefung sich auch die Anzahl der Interferenzringe ändert. Ferner ist der Abstand der inneren Interferenzringe bei Vertiefungen grösser als der der äussern.

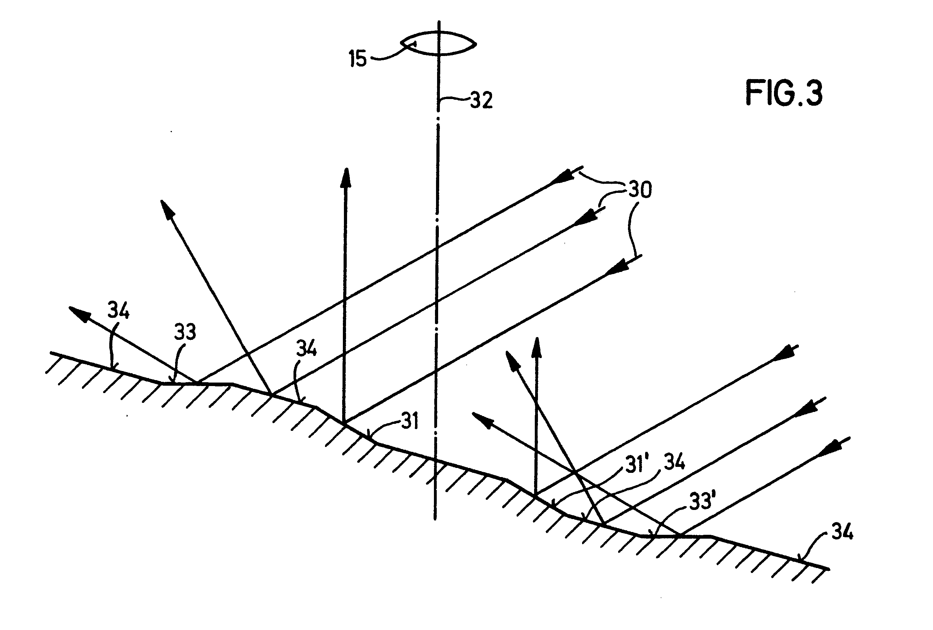

Direkt erkennbar gemacht werden können Erhöhungen und Vertiefungen in der zweiten Bildhälfte der optischen Betrachtungseinrichtung 15. Dazu wird das unter dem Glassegment interferometrisch geprüfte Oberflächenfeld durch einen Vorschub des Messobjekts mittels Drehen der Aufwickelrolle 7 ausserhalb des Glassegments unmittelbar nach der Kante 16 gebracht. Das von der Natriumdampflampe 14 einfallende Lichtstrahlenbündel 30 (Fig. 3) wird so eingestellt, dass sich an einer von der Einstrahlungsrichtung her gesehenen ansteigenden Flanke 31, 31' der Unebenheit eine Reflexion im wesentlichen in Richtung der optischen Achse 32 der Betrachtungseinrichtung 15 ergibt, während das an einer abfallenden Flanke 33, 33' reflektierte Licht von der optischen Achse abweicht.

Je nach Neigung erscheinen dann die ansteigenden Flanken mehr oder weniger hell, die abfallenden Flanken mehr oder weniger dunkel; die ebenen Flächenteile 34 liegen in ihrer Helligkeit dazwischen, so dass die Form und Struktur der Erhöhungen 31, 33 bzw. der Vertiefungen 31', 33', die durch die Lage der Flanken, d.h. der hellen und dunklen Stellen, zueinander in bezug auf die Einfallrichtung des Lichtes unterschieden werden können, erkennbar sind. Es versteht sich, dass die Reflexionsverhältnisse auch umgekehrt gewählt werden können.

Das erfindungsgemässe Verfahren und die Vorrichtung sind nicht auf die Anwendung eines Glassegments beschränkt. Es können auch flexible und auch ebene Auflageflächen eingesetzt werden. Entscheidend ist, dass das Messobjekt mit seiner zu untersuchenden Oberfläche in ausreichenden Kontakt mit der Auflagefläche gebracht werden kann.

Beispielsweise hat es sich als zweckmässig erwiesen, die Oberfläche von Kunststoff-Folien in zwei aufeinanderliegenden Lagen nach dem vorstehend beschriebenen Verfahren zu untersuchen, wobei eine Lage Auflage- bzw. Referenzfläche für die andere ist. Dadurch wird in einem Arbeitsgang die doppelte Fläche geprüft. Bei transparenten Folien kann die Referenzfläche auch durch eine nicht-transparente, aber reflektierende, ebenfalls gewölbte Fläche, z.B. durch die Mantelfläche eines verchromten Stabes gebildet werden.

Man schneidet dazu aus den äusseren Lagen der Folienrolle die zu untersuchende Probe in mehrere Lagen und legt diese auf eine plane Unterlage, die so geneigt wird, dass das von der Folie reflektierte Licht in das optische System eines darüber angeordneten Mikroskops fällt. Nachdem von den übereinanderliegenden Folienblättern alle bis auf zwei entfernt worden sind und evtl. zwischen die Lagen eingedrungene Luft durch Überrollen mit einer Quetschwalze ausgepresst wurde, kann die Untersuchung durchgeführt werden. An die Stelle des Glassegments tritt jetzt die obere Lage der beiden Folienblätter. Die Adhäsionskräfte zwischen den beiden Blättern und eine gewisse elektrostatische Aufladung sorgen für ein vollkommenes Anliegen der beiden Folienoberflächen. Bei dieser Präparation ist sichergestellt, dass bei der Vorbereitung der Untersuchung und während dieser keine Fremdpartikel auf die zu untersuchende Oberfläche gelangen, die das Untersuchungsergebnis verfälschen würden.

**Patentansprüche**

1. Verfahren zur Analyse der Oberflächenbeschaffenheit von flexiblen Materialien, insbesondere von Folienbahnen, durch Erzeugung von Interferenzstreifen (22, 22') mittels eines schräg auf die zu untersuchende Oberfläche eines Messobjekts (3) gerichteten Lichtstrahls (20), wobei der Lichtstrahl zu einem Teil an der Oberfläche (3') und zu einem anderen Teil an einer Referenzfläche (2) reflektiert wird und durch Überlagerung der beiden Teilstrahlen (2) ein dem von der Referenzfläche (2) sich abhebenden Oberflächenprofil des Messobjekts (3) äquivalentes Interferenzfeld (22, 22') entsteht, das zur Bestimmung der Ausdehnung des Oberflächenprofils in seiner Länge und Höhe mit Hilfe der Interferenzlinienabstände und der Wellenlänge des eingestrahlten Lichts ausgewertet wird, dadurch gekennzeichnet, dass das zu untersuchende Messobjekt (3) an die Referenzfläche (2) unter vorbestimmter Zugspannung angelegt wird.

2. Verfahren nach Anspruch 1, dadurch gekennzeichnet, dass zur Untersuchung auf das Vorliegen einer Erhöhung oder einer Vertiefung der Oberfläche das interferometrisch untersuchte Oberflächenfeld (3') in Form eines Materialbahnvorschubs des Messobjekts (3) ausserhalb der Referenzfläche (2) gebracht und dort unter einer Neigung zur optischen Achse zwischen 80 und 45 Winkelgraden betrachtet wird und die Einfallsrichtung des Lichtstrahlenbündels (30) dabei so gewählt wird, dass an einer beliebig gewählten, zur ebenen Oberfläche (34) des Messobjekts (3) antiparallelen Fläche der einfallende Lichtstrahl in Richtung der optischen Achse reflektiert wird, und dass aus der Helligkeitsverteilung des betrachteten Oberflächenfeldes auf den Verlauf dieser Flanken und damit auf den Verlauf des Oberflächenprofils geschlossen wird.

3. Vorrichtung zur Durchführung des Verfahrens nach Anspruch 1 und 2 mit einer Lichtquelle (14) und einer optischen Einrichtung (15) zur Sichtbarmachung des durch die zu untersuchende Oberfläche (3') des Messobjekts (3) und einer Referenzfläche (2) erzeugten Interferenzfeldes (22, 22'), gekennzeichnet durch eine Einrichtung (5, 7) zum Anlegen des Messobjekts (3) unter vorbestimmter Zugspannung an die Referenzfläche (2).

4. Vorrichtung nach Anspruch 3, dadurch gekennzeichnet, dass ein gebogenes Glassegment (1) vorgesehen ist, an dessen konvexer Referenzfläche (2) das Messobjekt (3) mit der zu untersuchenden Oberfläche (3') mit Hilfe der Spanneinrichtung (5, 7) zumindest teilweise anliegt.

5. Vorrichtung nach Anspruch 4, dadurch gekennzeichnet, dass die konvexe Krümmung des Glassegments (1) gleich der Krümmung eines gebräuchlichen Magnetkopfes im Bereich dessen Luftspaltes ist.

6. Vorrichtung nach Anspruch 3, dadurch gekennzeichnet, dass als Referenzfläche (2) ein zweites, flexibles Messobjet vorgesehen ist.

7. Vorrichtung nach Anspruch 3 bis 6, dadurch gekennzeichnet, dass die Einrichtung zum Anlegen des Messobjekts (3) aus einer bremsbaren Abwickelrolle (5) und einer antreibbaren Aufwickelrolle (7) besteht.

8. Vorrichtung nach Anspruch 3 bis 7, dadurch gekennzeichnet, dass zur Beobachtung mittels eines Fernsehmonitors und/oder zur Speicherung der sichtbar gemachten Oberflächenbeschaffenheit des Messobjekts (3) eine Laufbildkamera auf die optische Beobachtungseinrichtung (15), vorzugsweise auf das Okular eines Mikroskops, ausgerichtet ist.

**Claims**

1. A process for the analysis of the surface structure of flexible materials, especially of film webs, by producing interference bands (22, 22') by means of a light beam (20) directed at an angle onto the surface of the material (3) to be examined, the light beam being partially reflected from the surface (3') and partially from the reference surface (2) and the two partial beams (21, 21') being formed by reflection from the reference surface (2) and from the surface (3') to be examined, an interference field (22, 22') equivalent to the surface profile of the material (3) being examined, which surface profile differs from the reference surface (2), being formed by superposing the two partial beams, this interference field being evaluated with the aid of the interference band spacings and of the wavelength of the incident light, in order to determine the length and heigth of the surface profile, wherein the material (3) to be examined is placed against the reference surface (2) under a predetermined tension.

2. A process as claimed in claim 1, wherein, in order to ascertain whether a protrusion or a depression is present on the surface, the surface field (3'), being examined interferometrically, is brought outside the reference surface (2) by advancing the web of the material constituting the material (3) being examined, and is viewed outside the reference surface at an angle of from 80 to 45 degrees to the optical axis, the direction of incidence of the light beam (30) being so selected that the incident light beam is reflected in the direction of the optical axis from any chosen surface which is anti-parallel to the flat surface (34) of the material (3) being examined, and wherein the brightness distribution of the surface field being viewed provides conclusions as to the shape of these flanks and hence as to the shape of the surface profile.

3. Apparatus for carrying out the process claimed in claim 1 or 2, comprising a light source (14) and an optical device (15) for rendering visible the interference field (22, 22') produced by the surface (3') of the material (3) being examined and a reference surface (2), wherein a device (5, 7) for placing the material (3) being examined against the reference surface (2) under a predetermined tension is provided.

4. Apparatus as claimed in claim 3, wherein there is provided a curved glass segment (1), against whose convex reference surface (2) the surface (3') of the material (3) to be examined is caused to bear, at least partially, by means of the tensioning device (5, 7).

5. Apparatus as claimed in claim 4, wherein the convex curvature of the glass segment (1) is identical with the curvature of a conventional magnetic head in the region of the air gap of the head.

6. Apparatus as claimed in claim 3, wherein a second flexible material to be examined is provided as reference surface (2).

7. Apparatus as claimed in claims 3 to 6, wherein the device for causing the material (3) being examined to bear against the reference surface consists of a feed roll (5) which can be braked, and a take-up roll (7) which can be driven.

8. Apparatus as claimed in claims 3 to 7, wherein, for the purpose of viewing by means of a television monitor and/or for storing the information concerning the surface structure, which has been rendered visible, of the material (3) being examined, a cine camera is directed onto the optical viewing device (15), preferably onto the eyepiece of a microscope.

**Revendications**

1. Procédé pour analyser l'état de la surface de matériaux flexibles, notamment de bandes ou feuilles, par création de franges d'interférence (22, 22') à l'aide d'un rayon lumineux (20), qui est dirigé en oblique sur la surface (3') d'un objet à examiner (3) et est réfléchi en partie par la surface (3') et en partie par une surface de référence (2), la superposition des deux rayons partiels (21, 21'), réfléchis respectivement par la surface de référence (2) et la surface (3') de l'objet à examiner (3), créant un champ d'interférence (22, 22') équivalent au profil de la surface de l'objet à examiner (3), qui diffère de la surface de référence (2), ce champ permettant de déterminer, à l'aide des distances entre les franges d'interférence et de la longueur d'onde de la lumière incidente, l'étendue et la hauteur du profil de la surface, caractérisé en ce que l'objet à examiner (3) est juxtaposé à la surface de référence (2) sous une tension de traction déterminée.

2. Procédé suivant la revendication 1, caractérisé en ce que, pour vérifier la présence d'une élévation ou d'un évidement de la surface, on juxtapose le champ superficiel (3') examiné par interférométrie sous forme d'un saut de la bande ou feuille de l'objet à examiner (3') et la surface de référence (2) et on l'examine sous une inclinaison par rapport à l'axe optique comprise entre 80 et 45 degrés angulaires, la direction d'incidence du faisceau de rayons lumineux (30) étant choisie de façon à obtenir la réflexion, sur une surface anti-parallèle à la surface plane (34) de l'objet à examiner (3), choisie arbitrairement, du rayon lumineux incident en direction de l'axe optique, les variations dans la luminosité du champ superficiel observé permettant d'évaluer le tracé de ces flancs et partant le tracé du profil de la surface.

3. Installation pour la réalisation du procédé suivant la revendication 1 et la revendication 2 avec une source de lumière (14) et un montage optique (15) pour la visualisation du champ d'interférence (22, 22') créé par la surface (3') de l'objet à examiner (3) et une surface de référence (2), caractérisée en ce qu'elle comprend un dispositif (5, 7) pour la superposition de l'objet à examiner (3) sous une tension de traction déterminée à la surface de référence (2).

4. Installation suivant la revendication 3, caractérisée en ce qu'elle comprend un segment en verre incurvé (1), sur la surface de référence convexe (2) duquel la surface à examiner (3') de l'objet (3) est appliquée au moins partiellement par le dispositif de tension (5, 7).

5. Installation suivant la revendication 4, caractérisée en ce que la courbure convexe du segment en verre (1) correspond à la courbure d'une tête magnétique usuelle dans la région de la fente d'aération de celle-ci.

6. Installation suivant la revendication 3, caractérisée en ce que la surface de référence (2) est constituée par un deuxième objet flexible à examiner.

7. Installation suivant les revendications 3 à 6, caractérisée en ce que le dispositif pour la superposition de l'objet à examiner (3) est constitué d'un rouleau dérouleur (5) pouvant être freiné et d'un rouleau enrouleur (7) entraîné.

8. Installation suivant les revendications 3 à 7, caractérisée en ce qu'une caméra de prise de vues est dirigée sur le dispositif d'observation optique (15), de préférence sur l'oculaire d'un microscope, pour la visualisation sur un écran de télévision et(ou) la mise en mémoire de l'état de la surface, rendu visible, de l'objet examiné (3).

FIG.1

FIG.2

FIG.3

0 032 710

FIG.4